# EUROPEAN PATENT APPLICATION

(11) **EP 1 343 325 A2**
(43) Date of publication of application: **10.09.2003**
(21) Application number: 03251402.8
(22) Date of filing: 07.03.2003
(51) Int. Cl.: H04N 7/173

(54) **Serving user requested data in an interactive television system**

(30) Priority: 07.03.2002 GB 0205404
(71) Applicant: Chello Broadband NV, 1119 PE Schiphol Rijk (NL)
(72) Inventor: Robert van Noetsele, Middelbeers (NL)
(74) Representative: Slingsby, Philip Roy

(57) **Abstract**

A data transmission system comprising: a data distribution unit for distributing items of data to data terminals; and a plurality of data terminals capable of requesting items of data from the data distribution unit; a point-to-point communication system whereby each data terminal can transmit point-to-point messages from itself to the data distribution unit; and a broadcast communication system whereby the data distribution unit can broadcast data to all the terminals; the data terminals being arranged to transmit requests for items of data to the data distribution unit via the point-to-point communication system, and the data distribution unit being arranged to, in response to receiving such a request, retrieve the requested item of data and transmit it via the broadcast communication system. The serving device can detect frequently asked resources and initiate broadcast of such resources through the broadcasting device, eliminating all bandwidth usage for future requests of such resources.

## Description

This invention relates to serving data to terminals, for example in interactive television applications.

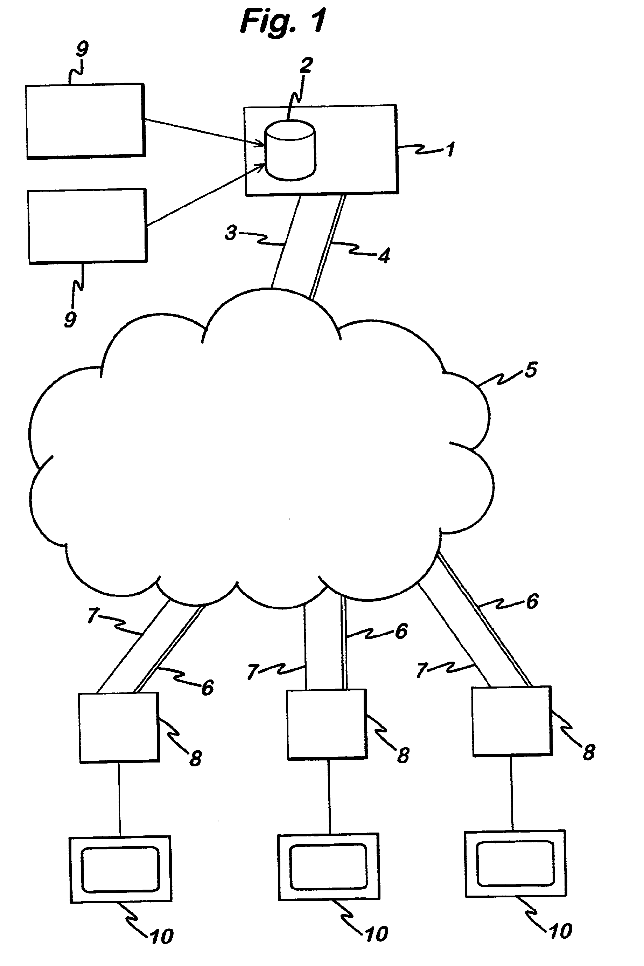

Figure 1 shows an interactive television system. The system comprises a head-end unit 1 which has a store 2 for storing data to be transmitted to receiver terminals 8. The head-end unit is connected to a transmission network 5 by two data links 3, 4. Data link 3 is arranged for point-to-point communications between a receiver terminal and the head-end unit 1. Data link 4 is arranged for broadcasting data from the head-end unit 1 to the receiver terminals. Data links 3 and 4 pass over communications network 5 to the terminals 8. Each of the terminals 8 is arranged to receive broadcast communications from the network over a broadcast link 6, and to receive and transmit point-to-point communications over link 7. In practice, terminals 8 could be set-top-boxes that could provide video output to televisions 10 based on data that they receive; links 6 could be video or interactive television channel feeds and links 7 could be packet-switched internet protocol links.

The head-end unit receives data for transmission from data providers 10, such as channel operators.

The data to be received by the terminals can include units (e.g. pages) of interactive data such as web pages. A user of a terminal can request specific pages to be provided to his terminal 8 by the head-end unit. At present there are two approaches to this service.

In one approach, which is used in the Teletext system, for example, the head-end unit 1 transmits all available pages in turn over a broadcast channel to all the terminals 8. The terminals receive the pages and display the desired one(s). This approach is disadvantageous because if there is a large number of pages there may be a considerable delay before one is transmitted. This delay makes the system inconvenient for a user as it may take some time before a page he wants to see can be received and then displayed.

In another approach, which is frequently used for displaying web pages, a user indicates to his terminal a request for a particular page. That request is transmitted by the terminal to the head-end unit 1 over the point-to-point link 7, 3. This could be sent as TCP/IP packets specifying the head-end unit 1 as the destination address. On receiving the request the head-end unit responds over the same link by sending the data to form the requested page. The data could again be sent as TCP/IP packets, this time specifying the relevant terminal 8 as the destination address. This approach has the disadvantage that if many terminals request pages at similar times the point-to-point links (especially link 3) can become overloaded.

There is therefore a need for an improved way of serving this data to the terminals.

According to one aspect of the present invention there is provided a data transmission system comprising: a data distribution unit for distributing items of data to data terminals; and a plurality of data terminals capable of requesting items of data from the data distribution unit; a point-to-point communication system whereby each data terminal can transmit point-to-point messages from itself to the data distribution unit; and a broadcast communication system whereby the data distribution unit can broadcast data to all the terminals; the data terminals being arranged to transmit requests for items of data to the data distribution unit via the point-to-point communication system, and the data distribution unit being arranged to, in response to receiving such a request, retrieve the requested item of data and transmit it via the broadcast communication system.

According to a second aspect of the present invention there is provided a method for distributing data in data transmission system comprising a data distribution unit for distributing items of data to data terminals; a plurality of data terminals capable of requesting items of data from the data distribution unit; a point-to-point communication system whereby each data terminal can transmit point-to-point messages from itself to the data distribution unit; and a broadcast communication system whereby the data distribution unit can broadcast data to all the terminals; the method comprising the steps of: transmitting from a data terminal to the data distribution unit via the point-to-point communication system a request for an item of data; in response to receiving that request, the data distribution unit retrieving the requested item of data and transmitting it via the broadcast communication system.

The data distribution unit is preferably arranged to transmit the item of data via the broadcast communication system in such a way that it can be received by all of the terminals. The item is preferably transmitted without an indication of an address to which it is directed. The item is preferably transmitted towards all the terminals.

The point-to-point communication system could be a packet-switched communication system. Alternatively it could be a circuit switched system, for example in which during communications from a terminal to the distribution unit a dedicated physical link is provided between the two.

The data distribution unit suitably has an address in the point-to-point communication system. Then each request suitably includes the address of the data distribution unit. The address may be an internet protocol (IP) address.

Preferably each request includes information identifying an item of data. Each item of data that is available preferably has a unique identifier whereby it can be identified in this way.

Conveniently requests transmitted by the terminals are aggregated so that if multiple requests for an item of data are received during a time period that item of data is broadcast only once in response to those requests. Where the functions of the data distribution unit are distributed between two or more entities, one entity may receive and aggregate the requests and send an aggregated set of requests to another entity of the data distribution unit that retrieves and broadcasts the items of data.

The items of data may comprise enhanced television content.

The data distribution unit may be arranged to transmit the items of data over a single channel of the broadcast communication system. That may be a dedicated enhanced content channel. Alternatively the data distribution unit may be arranged to transmit the items of data over a broadcast video channel.

The broadcast communication system may be capable of carrying video channels to the terminals.

Each terminal may be configured to, after transmitting a request for an item of data, monitor the broadcast communication system for broadcast transmission of the item of data and on receiving the item of data process it for presentation to a user.

Preferably the serving device is arranged so that it can detect frequently requested resources (e.g. resources that are requested more frequently than a predetermined threshold) and initiate broadcast of such resources through the broadcasting device. This can have the advantage of maximum reduction of bandwidth usage in servicing future requests for such resources.

The invention will now be described by way of example with reference to the accompanying drawings, in which like reference numerals refer to like components.

Figures 1, 2 and 3 show interactive television systems.

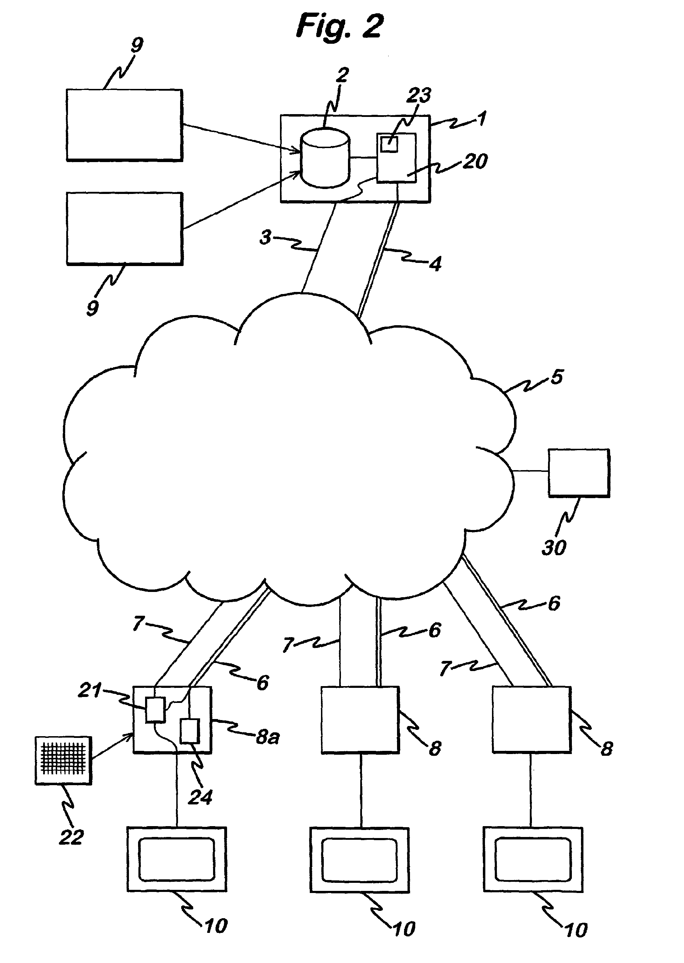

In the system of figure 2 the head-end unit 1 and the terminals 8 are provided with the same links 3, 4, 6, 7 as in the system of figure 1. However, in the system of figure 2 the head-end unit and the terminals are arranged to use those links in a different way.

In the system of figure 2, the head-end unit includes a data flow controller 20. The data flow controller 20 is connected to receive data from link 3, acquire data from the store 2 and form a broadcast transmission stream over link 4 for transmission to the terminals 8. The terminals can determine whether actually to receive and process that stream or not. The terminals 8 (as illustrated for terminal 8a as an example) have a data flow controller 21. The data flow controller 21 is connected to receive user commands from a user interface unit 22 such as a remote controller, transmit data on link 7, receive broadcast data on link 6 and form a display signal for transmission to the television 10 for display.

In operation, when a user of a terminal requests an item of interactive data such as a page, he does so using user interface unit 22, which transmits a signal accordingly to controller 21. Controller 21 forms a message to request the interactive data, which is sent to head-end unit 1 over link 7. The message could be send as one or more TCP/IP packets specifying the address of the head-end unit 1 as their destination address.

When the request is received at the head-end unit 1 it is passed to the controller 1. The controller interprets the request as being a request for a specific item of data and retrieves that data from store 2. Then the controller causes the item of data to be broadcast over one of the broadcast channels using link 4. Conveniently one of the broadcast channels is dedicated for use by the controller 20 in transmitting such items of data to the terminals.

All the terminals can receive the broadcast item of data. Terminal 8a and any other terminals that have requested that item of data store it in a cache 24 and then make use of it, for example by interpreting it and displaying it on display 10.

Other terminals than terminal 8a may make requests for items of data. Those requests are each made over point-to-point links 7, 3 and served over broadcast links 4, 6.

According to this system the point-to-point links 7,3 are used for sending the request messages and not the items of data. Since the request messages are typically short in comparison to the items of data this will typically put little load on the point-to-point system. The items of data are served over the broadcast links 4, 6. These links typically have larger capacity than the point-to-point links, and can better handle sending the items of data to the terminals than can the point-to-point links.

The present system can also give a reduction in the amount of data that is to be transmitted. In comparison to the prior Teletext-type systems, the head-end unit only needs to transmit pages that have been requested; not all the pages. In comparison to the prior web-browser type systems, if a page is requested simultaneously by more than one terminal it needs only to be transmitted once by the head-end since that transmission can be received by all the terminals 8.

The controller 20 may have additional management capabilities. For example, there is likely to be some delay between interpreting a request from a terminal and transmitting the item of data in response to that request. The identities of items of data for which requests are pending during that delay are stored in buffer 23. When a request for an item of data is received the identity of the requested item of data is compared with the identities of those in the buffer. If the item's identity is not present in the buffer then the identity is added to the buffer and the controller begins to retrieve the item of data from the store 2. If the item's identity is present in the buffer then the identity is not added to the buffer and no retrieval is performed. Since that retrieval is already under way it need not be performed again. When the item of data is broadcast in response to the first request for it, that will satisfy both terminals that requested it. This allows the amount of data that is transmitted over link 4 to be reduced further.

Each terminal 8 may cache in its cache 24 some or all of the items of data that are broadcast in addition to the ones it has requested itself. Before requesting an item of data it checks in the cache to determine whether it already has the item of data in the cache. If it does then it does not request it from the head-end 1 but causes it to be displayed directly from the cache.

The terminals 8 could, for example be set-top boxes.

The point-to-point links 3, 7 could be dedicated point-to-point physical links, but are more preferably implemented over shared links by means of packet-switched protocols.

The broadcast links 4, 6 can be carried by any suitable medium, for example satellite or cable. Preferably a number of broadcast channels are carried simultaneously over the links. These could include video channels, data channels and enhanced content/multimedia channels. The term enhanced content is used herein to refer to content available to be played out at the request of a user onto a television screen. The enhanced content could be in addition to the basic video data of a television programme or movie. It may consist of information, such as news, television schedules, or weather reports, or may invite a response from a user. The items of data could be one or more of enhanced content items such as pictures, text, multimedia pages, video clips and audio clips. The items of data could be web pages or the like. The enhanced content could be coded in HTML, XML or another mark-up language.

A number of options are available for the user to select items of data for download. Preferably each item has an identifier. The user could select an item by entering its identifier directly, or by selecting a link to the item that is embedded in another item.

The head-end unit 1 does not need to store the items locally in store 2. It could retrieve them from remote storage locations, for example by downloading them from stores such as web server 30.

The terminals 8 may be arranged so that their requests are distributed over time so as to even out the load on the links 3, 7. This may be done by delaying requests from some or all of the terminals by a random or determined amount, for example as described in our co-pending application entitled "Interactive Television System".

The terminals 8 are preferably aware of the channel that they should monitor for data items transmitted in response to their requests. That could be a dedicated channel or, especially where the items of data are linked to another programme (such as a video stream) the items of data could be piggybacked on another channel. The items of data could be streamed continuously as they are requested, or could be transited periodically. Enhanced content may be transmitted over a network independently of video data, or alternatively may be embedded in the video data.

The present system is preferably an interactive television system. The term "interactive television" suggests that a viewer can provide input to the system, for example to respond to queries within the enhanced content or to control the video stream that he receives. An example of a user input/response is an answer to a question posed in the enhanced content (or interactive content). If the video content being displayed on a television is, for example, a quiz show, it may be desirable to provide interactive content consisting of quiz questions corresponding to those being asked in the quiz show.

The terminals 8 could provide output to other devices instead of or in addition to televisions 10. Examples include audio reproduction systems and computers.

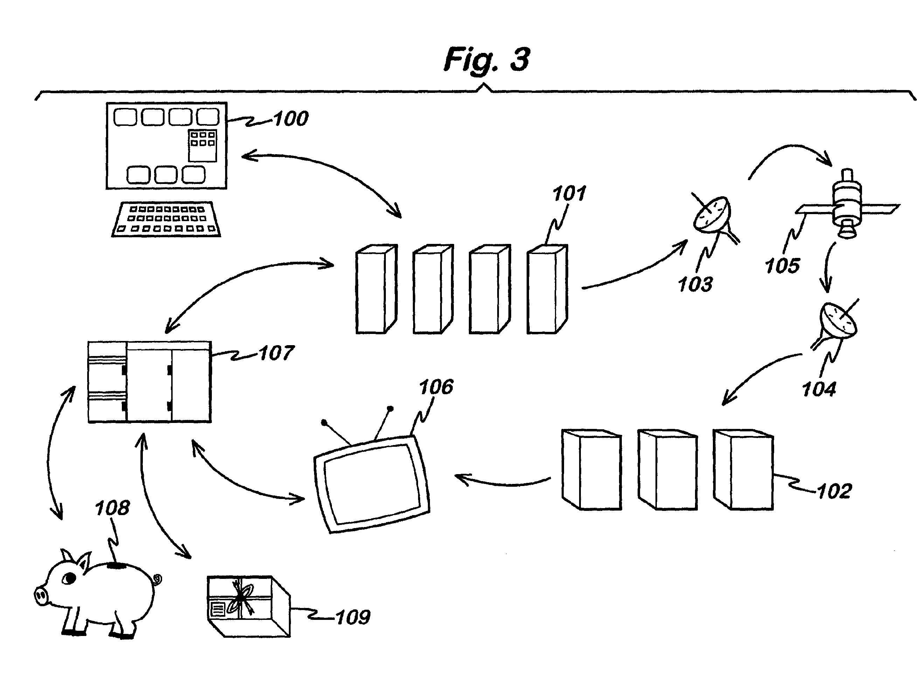

Figure 3 shows an example of a broadcast network in which the present system may be employed.

The network shown in Figure 3 comprises an Edit Suite 100, a Playout Management Centre 101, a Media Control Manager 102, uplink and downlink stations 103 and 104, a satellite 105, a decoder 106, and a Transaction Management System 107. The decoder 106 may, for example, be a set-top box or a digital television. Each of the components of the system will be described in turn. The components can communicate with each other as indicated by the arrows in Figure 3.

Interactive content is produced at the Edit Suite 100 (specifically, in a Content Production Manager (CPM)) on generic re-usable templates. The general templates can be manipulated by designers to produce a template with the desired format for a particular application. This specific template can then be saved to the memory of the CPM. Subsequent data can be added easily and quickly to the application-specific template, for example, daily news, weather or TV guides.

Once data has been added to a template at a CPM, the populated template is inputted to an Event Broker Console (EBC), the second stage of an Edit Suite, where it has a stream script added to it.

Meta-data is then added to the main broadcast stream (i.e. the video stream) that is associated with the content of the template. The meta-data allows the stream script to be triggered in real-time to synchronise the content with the main broadcast stream. For live television events, the EBC can be used to manage the broadcast of interactive pages, as will be described later.

Following production at the Edit Suite, the template data is passed to a Playout Management Centre (PMC) 101, which converts the data to a signal (representing pages of interactive content) in the relevant format for any platform on which it is to be received and displayed. The PMC can store the interactive content until it is needed. Once the interactive content is required, it is transmitted to a Media Control Manager (MCM) 102. To reach the MCM the interactive content could be sent to an uplink station 103 and transmitted via a satellite 105 to a downlink station 104 or could be sent in another way, for instance by cable.

The MCM 102 is located in a cable TV digital head end. The MCM receives interactive data from a PMC 101, stores it until it is to be played out, and, in response to receiving a trigger, broadcasts it to decoders 106. The decoders could be set-top boxes connected to televisions, or they could be digital televisions.

The MCM can be informed in a number of ways of when to cause a page of interactive content to be played out, by being transmitted from the MCM to the decoder 106, and subsequently displayed. For example, if the television event to which the interactive content is related is being broadcast live, then an editor at an Edit Suite 100 can manually trigger the play-out of the content from the MCMs 102. to ensure that the content is synchronised with an appropriate part of the television event. A trigger would be sent from the Edit Suite 100 to the PMC 101; the PMC would transcode the trigger and forward it to the MCM 102, and then the MCM would broadcast the trigger towards decoders 106. Alternatively, triggers can be arranged to be sent automatically at pre-determined times during a television event. In this case, the MCM has access to a time schedule and on the basis of this schedule, sends triggers to decoders at the times when it is desired for the interactive content to be played out. For instance, a TV programme might start at 7.30pm, and triggers could then be sent automatically from the MCM 102 at 7.31pm, 7.35pm, 7.42pm and so on, depending on the parts of the programme with which each page of interactive content is related. As another alternative, markers could be embedded in the video signal associated with a particular set of interactive pages, and triggers could be generated in dependence on the association between the markers and the pages. These markers would be the meta-data referred to above which is added to the video stream.

The MCM 102 can also manage the bandwidth allocated to video signals and interactive content signals according to television events taking place. Content can also be stored/buffered at the MCM.

A Transaction Management System (TMS) 107 is employed to deal with responses of subscribers to the interactive content broadcast. The TMS is capable of handling large numbers of concurrent responses, and can produce, for example, lists of winners of a competition following the subscriber responses. The TMS is linked to the PMC so that information related to subscriber responses can be fed back and inserted into broadcasts from the MCM 102. In addition, the PMC can communicate with the TMS.

For handling payments to action user responses the TMS is linked to a banking system 108. The TMS may send signals to other functions such as a third party fulfilment centre 109 so as to action user responses, for example to fulfil purchases or issue prizes.

Editors at the Edit Suites 100 can communicate with the TMS 107 via PMC 101 in order to determine how the TMS should react to responses sent from subscribers.

In the network of Figure 3, the Playout Management Centre 101 may comprise the signal formatting apparatus 10 of Figure 2.

In a system as described above with reference to Figure 3, there would typically be multiple Edit Suites 100, one PMC 101, multiple MCMs 102 distributed geographically across an area served by the network, and one TMS 107, although in future it may be desirable in terms of efficiency to provide multiple PMCs and/or TMSs. Decoders 106 would be positioned locally to individual viewers, for example in their homes or in public buildings.

In the system of figure 3 the PMC 101 could take the role of the head-end unit 1 in the system of figure 2. The links 4, 6 would be provided via the chain 103, 105, 104, 102 to the terminal 106. The links 7, 3 would be provided via 107. Content provider 100 could provide the items of data that are to be served to the terminals.

In the system of figure 3, the TMS 107 may also cache user requests. To reduce load on the link between it and the PMC 101 it could aggregate all requests received from terminals over a period of time such as 1 second, and transmit to the PMC only the unique requests received during that period.

The applicant draws attention to the fact that the present invention may include any feature or combination of features disclosed herein either implicitly or explicitly or any generalisation thereof, without limitation to the scope of any definitions set out above. In view of the foregoing description it will be evident to a person skilled in the art that various modifications may be made within the scope of the invention.

## Claims

1. A data transmission system comprising:
a data distribution unit for distributing items of data to data terminals; and
a plurality of data terminals capable of requesting items of data from the data distribution unit;
a point-to-point communication system whereby each data terminal can transmit point-to-point messages from itself to the data distribution unit; and
a broadcast communication system whereby the data distribution unit can broadcast data to all the terminals;
the data terminals being arranged to transmit requests for items of data to the data distribution unit via the point-to-point communication system, and the data distribution unit being arranged to, in response to receiving such a request, retrieve the requested item of data and transmit it via the broadcast communication system.

2. A data transmission system as claimed in claim 1, wherein the point-to-point communication system is a packet-switched communication system.

3. A data transmission system as claimed in claim 1 or 2, wherein the data distribution unit has an address in the point-to-point communication system and each request includes the address of the data distribution unit.

4. A data transmission system as claimed in any preceding claim, wherein each request includes information identifying an item of data.

5. A data transmission system as claimed in any preceding claim, wherein requests transmitted by the terminals are aggregated so that if multiple requests for an item of data are received during a time period that item of data is broadcast only once in response to those requests.

6. A data transmission system as claimed in any preceding claim, wherein the items of data comprise enhanced television content.

7. A data transmission system as claimed in any preceding claim, wherein the data distribution unit is arranged to transmit the items of data over a single channel of the broadcast communication system

8. A data transmission system as claimed in any preceding claim, wherein the broadcast communication system is capable of carrying video channels to the terminals.

9. A data transmission system as claimed in any preceding claim, wherein each terminal is configured to, after transmitting a request for an item of data, monitor the broadcast communication system for broadcast transmission of the item of data and on receiving the item of data process it for presentation to a user.

10. A method for distributing data in data transmission system comprising a data distribution unit for distributing items of data to data terminals; a plurality of data terminals capable of requesting items of data from the data distribution unit; a point-to-point communication system whereby each data terminal can transmit point-to-point messages from itself to the data distribution unit; and a broadcast communication system whereby the data distribution unit can broadcast data to all the terminals; the method comprising the steps of:
transmitting from a data terminal to the data distribution unit via the point-to-point communication system a request for an item of data;
in response to receiving that request, the data distribution unit retrieving the requested item of data and transmitting it via the broadcast communication system.

11. A data transmission system substantially as herein described with reference to figures 2 and 3 of the accompanying drawings.

12. A method for distributing data in a data transmission system substantially as herein described with reference to figures 2 and 3 of the accompanying drawings.
